# FASCICULE DE BREVET EUROPEEN

(11) **EP 0 627 337 B1**
(45) Date de publication et mention de la délivrance du brevet: **27.12.1996**
(21) Numéro de dépôt: 94400987.7
(22) Date de dépôt: 05.05.1994
(51) Int. Cl.: B60N 2/14, B60R 22/26, B60R 22/04

(54) **Siège pour véhicules à moteur**
Kraftfahrzeugsitz
Seat for motor vehicles

(30) Priorité: 10.05.1993 FR 9305592
(43) Date de publication de la demande: 07.12.1994
(73) Titulaire: CESA COMPAGNIE EUROPEENNE DE SIEGES POUR AUTOMOBILES, F-92307 Levallois-Perret Cédex (FR)
(72) Inventeur: Baret, Frédéric, F-45200 Montargis (FR); Fourrey, François, F-25200 Montbeliard (FR)
(74) Mandataire: Polus, Camille

(56) Documents cités:
- WO-A-92/18348
- DE-A- 2 531 530
- JP-A- 5 058 207
- US-A- 4 120 531
- US-A- 4 238 135
- US-A- 4 722 573
- US-A- 4 796 916

## Description

La présente invention concerne un siège perfectionné et, plus particulièrement, un siège en partie tournant et, s'il y a lieu, repliable et éventuellement escamotable notamment pour véhicules automobiles et tout spécialement pour véhicules automobiles terrestres à moteur.

Le but de l'invention est l'obtention d'un siège, en particulier pour véhicule automobile, qui soit confortable, qui permette une utilisation facile et autorise, s'il y a lieu, une accessibilité aisée à ce qui se trouve en arrière du siège et, aussi, en outre permette une mise en service avec une sécurité améliorée.

On connaît des sièges pour véhicules automobiles terrestres et, en particulier, des sièges enveloppant pour ceux d'entre eux à tendance sportive dont la coque ou structure est, en général, équipée seulement de deux portières d'accès latérales placées, chacune, sur l'un des deux côtés opposés du véhicule. Ces sièges sont habituellement munis d'un coussin d'assise et d'un coussin de dossier qui présentent des bourrelets latéraux délimitant des formes en creux favorables au maintien efficace des occupants lorsqu'ils sont soumis à des efforts latéraux transversaux tels que ceux qui se produisent notamment lors de la prise à grande vitesse de courbes de rayon relativement court. Ces sièges sont en outre souvent équipés de manière, selon les cas, soit à permettre un rabattement du dossier contre l'assise, soit un basculement vers l'avant de l'ensemble du siège, dossier et assise comprise, soit l'un ou l'autre de ces deux déplacements associé de plus à un déplacement vers l'avant en direction du tableau de bord, de l'ensemble du siège ou de son assise afin de faciliter l'accès à l'arrière du véhicule, notamment aux places arrière.

Ce type de siège à bourrelets latéraux et dossier rabattable, s'il offre des avantages n'est pas pour autant dépourvu d'inconvénients. En effet, on notera que la présence des bourrelets latéraux, notamment du coussin de l'assise, constitue une gêne considérable qui crée des difficultés pour s'installer ou pour s'extraire du siège.

On connaît aussi des sièges, en particulier pour une place avant de véhicule, qui sont montés tournants autour d'un axe pratiquement vertical et qui possèdent des moyens de verrouillage pour immobiliser le siège en position normale "route", c'est-à-dire celle pour laquelle l'occupant qui y est installé est dirigé face au pare-brise du véhicule. Ces sièges ont été mis au point soit pour faciliter l'accès ou la sortie du véhicule, soit pour modifier l'espace intérieur du véhicule et le transformer par exemple en "salon". Un exemple de ce type de solution est illustré par le document EP-A-0 358 285.

Ce type de siège est habituellement utilisé avec une ceinture de sécurité pour satisfaire à la réglementation édictée par les Pouvoirs Publics ou des organismes professionnels. Une telle ceinture comprend une sangle qui est maintenue le plus souvent par trois points d'ancrage qui sont fixés à la structure ou coque du véhicule au besoin par l'entremise d'un enrouleur et qui est mise en place à l'aide d'une boucle dont le pêne se verrouille sur une gâche. On observera que les sièges de ce type ne permettent pas une mise en oeuvre facile d'une ceinture de sécurité du type dit "passif", c'est-à-dire d'une ceinture dont la mise en place contre le corps de l'occupant du siège, et son retrait, sont automatiques et sous la dépendance de la fermeture d'une portière et/ou de l'occupation du siège.

Ce type de siège présente deux types d'inconvénients. . L'un de ces inconvénients est dû au fait que la rotation de l'ensemble du siège nécessite un "dégagement" important libre pour son évolution, ce qui n'est pas compatible avec des petits véhicules compacts. L'autre de ces inconvénients est dû au fait que la ceinture de sécurité reste fixe en position relativement à la coque ou structure et ne protège pas efficacement un passager de taille extrême, grand ou petit, et même peut présenter un danger.

US-A-4 120 531 (correspondant au préambule de la revendication indépendante) décrit un siège pour véhicule, du type destiné à être utilisé avec une ceinture de sécurité apte à prendre une position active où elle est à même de retenir un occupant sur son siège à l'aide d'une sangle, et du type comprenant une assise avec un coussin porté par une armature montée sur un soubassement, et un dossier avec un coussin porté par une armature, l'armature d'assise portant des moyens formant point d'ancrage pour le maintien de la sangle de la ceinture.

WO-A-92 18 348 décrit un siège rotatif pour véhicule automobile.

US-A-4 796 916 décrit un siège pour véhicule automobile muni d'une ceinture du type "passif".

Le but de l'invention est de remédier à la plupart de ces inconvénients à l'aide d'un siège perfectionné qui, de surcroît offre la possibilité de mise en place automatique d'une ceinture de sécurité contre le corps de son occupant après qu'il s'y est installé.

A cet effet, l'invention a pour objet un siège du type précité, caractérisé en ce que l'assise est montée rotative sur le soubassement indépendamment du dossier et en ce que lesdits moyens de verrouillage comprennent un support d'ancrage solidaire en rotation de l'armature d'assise portant, d'une part, des moyens formant point d'ancrage, et d'autre part, des premiers moyens d'accrochage libérable de ce support au soubassement coopérant avec des seconds moyens complémentaires reliés à ce soubassement.

L'invention a aussi pour objet l'application d'un tel siège à un véhicule automobile terrestre à moteur.

D'autres caractéristiques de l'invention ressortiront de la lecture de la description et des revendications qui suivent, ainsi que de l'examen du dessin annexé, donné seulement à titre d'exemple, où :
- la Figure 1 est une vue perspective schématique d'une mode de réalisation d'un siège perfectionné selon l'invention dans son application à un véhicule automobile terrestre à moteur, illustré partiellement symboliquement comme s'il était transparent;
- la Figure 2 est une vue latérale, partielle, de la Figure 1 avec une coupe méridienne axiale locale;
- la Figure 3 est une vue de dessus, partielle, de la Figure 1, où le coussin d'assise occupe sa position normale route, portière fermée;
- la Figure 4 est une vue analogue à celle de la Figure 3 mais où le coussin d'assise occupe maintenant sa position tournée d'accès, portière ouverte;
- la Figure 5 est une vue de détail d'un constituant partiellement en coupe; et,
- la Figure 6 est une vue partielle en coupe méridienne axiale, d'un autre constituant.

Les sièges en général, et plus spécialement les sièges pour véhicules automobiles à moteur notamment terrestres en particulier, étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un siège perfectionné selon l'invention avant d'en exposer la fabrication au besoin, et le montage et le fonctionnement.

Dans ce qui suit, on décrira un siège selon l'invention pour son application particulière à un véhicule automobile terrestre à moteur. Toutes les indications relatives à l'orientation du siège telle que verticale, horizontale, latérale, transversale, longitudinale par exemple sont faites par rapport aux axes traditionnels d'orientation d'un véhicule sachant que l'on qualifie de "normale" la position pour laquelle le siège occupe une configuration où, lorsqu'il est occupé, celui qui y est assis est face à la route en-direction du pare-brise. Il est clair toutefois qu'une telle application n'est pas la seule possible.

Pour la commodité de l'exposé, on supposera par la suite que le siège perfectionné selon l'invention est le siège avant gauche d'un véhicule. Il est clair que cette application spécifique n'est pas la seule et qu'un siège perfectionné selon l'invention convient aussi pour un siège avant droit ou bien, de même, pour les places arrière d'un véhicule automobile terrestre notamment dit de tourisme ou autre.

Pour son application particulière qui est décrite par la suite, on suppose qu'un siège perfectionné selon l'invention est placé dans une coque Cₒ ou structure d'un véhicule dont l'une des baies peut être occultée par une portière Pₒ reliée à la coque ou structure par au moins une charnière ou analogue Cₕ, et qui est pourvue d'un sol ou plancher non référencé destiné à recevoir le siège qui y est amarré. Pour la commodité de la représentation, une telle partie d'un véhicule à moteur automobile terrestre est dessinée très schématiquement, illustrée comme si elle était transparente. Un tel véhicule est de tout type classique connu.

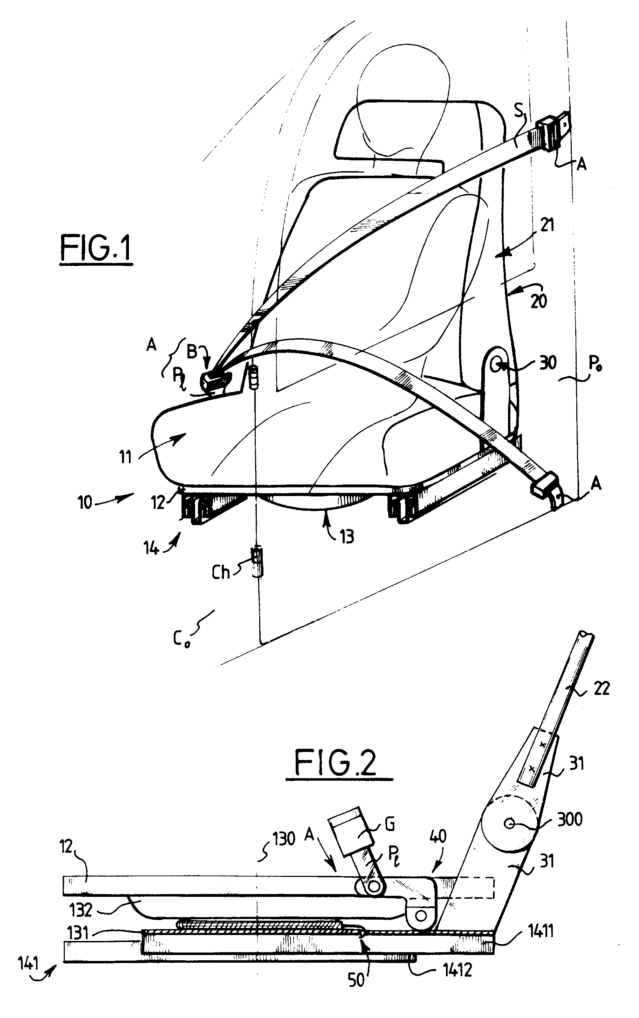

De préférence et, pour les raisons bien connues rappelées auparavant, un tel siège est utilisé avec une ceinture de sécurité destinée à protéger l'occupant du siège en cas de choc ou d'impact à grande composante longitudinale. Une telle ceinture de sécurité comprend, habituellement, une sangle S maintenue par au moins un point d'ancrage A, et de préférence trois, de manière à avoir un brin thoracique et un brin ventral, l'un des points d'ancrage étant situé approximativement au niveau de la hanche de l'occupant du siège et les deux autres points d'ancrage étant situés, de l'autre côté opposé du siège, l'un approximativement à la hauteur de la hanche de l'occupant et l'autre approximativement à la hauteur de son épaule comme cela est classique et clairement illustré sur la Figure 1. S'il y a lieu cette ceinture de sécurité est équipée d'un enrouleur non dessiné et d'une boucle B avec un pêne P associé à la sangle S et avec une gâche G reliée, directement ou indirectement, à la coque ou structure par l'intermédiaire d'un pédoncule P₁.

Tout ceci est classique et on ne s'y étendra pas davantage.

Un siège perfectionné selon l'invention comprend, essentiellement, une assise 10, un dossier 20, s'il y a lieu une articulation 30, et des moyens de verrouillage 40. En cas de besoin, le siège selon l'invention comprend aussi un dispositif de rappel 50, un asservissement 60, un mécanisme de reprise d'effort 70 et une sécurité 80 pour prévenir la mise en marche du moteur dans certaines circonstances.

L'assise 10 comprend un coussin 11 porté par une armature 12 qui est montée par l'entremise d'un plateau tournant 13 mobile en rotation selon un axe 130 de préférence approximativement vertical, relativement à un soubassement 14 destiné à reposer sur le sol ou plancher. De la sorte le coussin 11 de l'assise 10 peut tourner entre une position normale route et une position tournée d'accès. Le plateau tournant 13, de tout type classique courant, est par exemple à pivot soit avec une couronne de billes et des chemins de roulement pour celles-ci, soit lisse avec une tige et des paliers. Le plateau tournant 13 comprend un élément semi-fixe 131 solidaire du soubassement 14 et un élément mobile 132 solidaire de l'armature 12 du coussin 11. De la sorte, l'élément mobile 132 peut tourner selon l'axe 130 par rapport à l'élément semi-fixe 131. Le soubassement 14, qui sert en quelque sorte de piètement, est associé au sol ou plancher par exemple par une liaison de tout type classique connu telle que des gonds, qui permet s'il y a lieu le basculement de l'ensemble du siège vers l'avant selon un axe par exemple orthogonal à l'axe 130. Dans ce cas, la retenue du soubassement contre le plancher se fait alors à l'aide d'une serrure ou similaire. Un exemple de réalisation est par exemple exposé dans le document FR-A-2 662 126. Le soubassement 14 est, par exemple, constitué d'une glissière 141 de tout type classique qui comprend une coulisse 1411 à laquelle est fixé l'élément semi-fixe 131 du plateau tournant 13 fait par exemple d'une tôle convenablement emboutie et soudée, et une embase 1412 appropriée qui est reliée au sol ou plancher au besoin par l'entremise de la liaison indiquée précédemment. Ces différents constituants sont représentés de façon très schématique sur les figures et on observera qu'un siège est habituellement équipé de deux glissières. La glissière, comme on le sait, permet de régler longitudinalement la position du siège par rapport au sol ou au plancher afin d'adapter cette position à la morphologie de son occupant, au confort qu'il recherche et, au besoin, à son style de conduite s'il s'agit du siège du pilote. La glissière est immobilisée dans la position choisie à l'aide d'un loqueteau ou similaire. Au besoin, cette glissière est d'un type dit "à mémoire" qui permet de replacer automatiquement le siège dans la position longitudinale dans laquelle il avait été placée auparavant si ce dernier a été repoussé vers l'avant pour faciliter l'accès aux places ou volume derrière lui. Un mode de réalisation d'une glissière à mémoire est, par exemple, décrit dans le document FR 2 631 592.

Des butées appropriées, de tout type classique convenable, judicieusement disposées, servent à maintenir le coussin d'assise par exemple dans sa position tournée d'accès et la (les) glissière(s) dans sa (leur) position(s) tout à l'avant.

La présence du plateau tournant 13 intercalé entre l'armature 12 du coussin 11 d'assise 10 et le soubassement 14 permet de faire pivoter le coussin par exemple d'environ 90°, entre la position normale dite de "route", et la position tournée, dite d'"accès", après une rotation de l'ordre d'un quart de tour dans un sens ou dans l'autre, selon qu'il s'agit du siège droit ou du siège gauche.

Le dossier 20 comprend, essentiellement, un coussin 21 porté par une armature 22.

De préférence, l'articulation 30 relie le soubassement 14 de l'assise 10 à l'armature 22 du dossier 20. Cette articulation qui comprend des flasques 31 reliés les uns à l'armature de l'assise et les autres à l'armature du dossier permet de faire pivoter le coussin du dossier, selon un axe 300 par exemple de préférence pratiquement orthogonal à l'axe 130 de rotation du coussin d'assise. Le coussin du dossier peut donc prendre une position modifiable relativement au coussin d'assise. Cette articulation 30, de tout type classique approprié connu, autorise s'il y a lieu une modification de l'inclinaison relative du coussin du dossier par rapport au coussin de l'assise, qui est continue ou discontinue et qui se fait suivant un axe confondu avec l'axe 300 ou distinct de ce dernier si, outre ce changement d'inclinaison, le coussin de dossier est aussi apte à se rabattre totalement pour être appliqué contre le coussin d'assise. Un loquet, non représenté, permet de maintenir comme il est connu le coussin de dossier dans une position redressée où un occupant peut faire reposer son dos contre lui tout en autorisant s'il y a lieu un réglage de l'inclinaison. La manoeuvre du loquet est assurée par une commande appropriée, de tout type connu par exemple à câble et gaine du type Bowden, ou à timonerie, reliée à une poignée située sur le côté extérieur du dossier pratiquement à mi-hauteur de ce dernier comme il est classique.

Les armatures, coussins et articulation sont de tout type courant classique habituellement utilisé notamment à bord des automobiles. C'est pourquoi, on ne s'y étendra pas plus amplement.

Les moyens de verrouillage 40 servent pour immobiliser le coussin 11 d'assise 10 notamment dans sa position normale et pour maintenir la ceinture de sécurité dans sa position active. Comme on le voit, les moyens de verrouillage 40 forment un point d'ancrage A de la sangle de la ceinture de sécurité, qui est placé directement ou non sur l'armature 12 du coussin 11 d'assise 10 et qui le relie au soubassement 14 directement ou indirectement, comme on le comprendra par la suite. Ces moyens d'ancrage 40 comprennent un support 41 d'ancrage associé par exemple à l'élément mobile 132 du plateau tournant de manière à être solidaire en rotation de l'armature 12 du coussin 11 d'assise 10. Le support d'ancrage 41 sert de gâche 411 constituée par exemple d'une ouverture circulaire. C'est sur ce support d'ancrage 41 qu'est fixée par exemple en particulier la gâche G d'une boucle B de la ceinture de sécurité par l'entremise du pédoncule P₁, comme il est classique. Les moyens de verrouillage 40 comprennent aussi un coffre 42 équipé d'un pêne 421 qui se présente sous la forme d'une barre ou similaire dont l'une des extrémités se termine par un chanfrein destiné à coopérer avec la gâche 411 et dont l'autre des extrémités se termine par un oeil ou similaire. Un ressort 422 sollicite élastiquement le pêne 421 dans une position où il se verrouille normalement sur la gâche 411 pour condamner les moyens de verrouillage 40 afin d'immobiliser le coussin 11 d'assise 10 dans sa position normale. Les moyens de verrouillage comprennent aussi une commande 43 reliée au pêne par exemple par l'entremise de son oeil. Cette commande, de tout type approprié, est par exemple manuelle et constituée d'une timonerie ou d'un câble terminé par une poignée de manoeuvre. Cette commande peut être aussi automatique par exemple électromécanique ou fluidique de tout type approprié, comme on le comprendra par la suite.

Le dispositif de rappel 50 tend à placer le coussin 11 d'assise 10 dans l'une ou moins de ses deux positions normale et tournée d'accès. Ce dispositif de rappel 50, de tout type approprié soit monostable soit bistable avec franchissement d'une position d'équilibre, peut fonctionner par exemple par gravité comme décrit dans le document US-A-3 207 464, ou fonctionner mécaniquement, électromagnétiquement, fluidiquement. Dans le mode de réalisation illustré, le dispositif de rappel 50 est mécanique et comprend un sandow ou ressort 51 dont l'une des extrémités est solidaire de l'élément semi-fixe 131 et dont l'autre des extrémités est solidaire de l'élément mobile 132 du plateau tournant, ainsi qu'une poulie 52 ou similaire calée en rotation sur l'élément mobile 132 et contre laquelle prend appui le sandow ou ressort 51.

De préférence, un asservissement 60 de tout type approprié, mécanique, électrique, hydraulique ou similaire est associé aux moyens de verrouillage 40 pour en assurer le fonctionnement et, en particulier, la décondamnation lors de la manoeuvre par exemple d'une portière de préférence correspondant au siège.

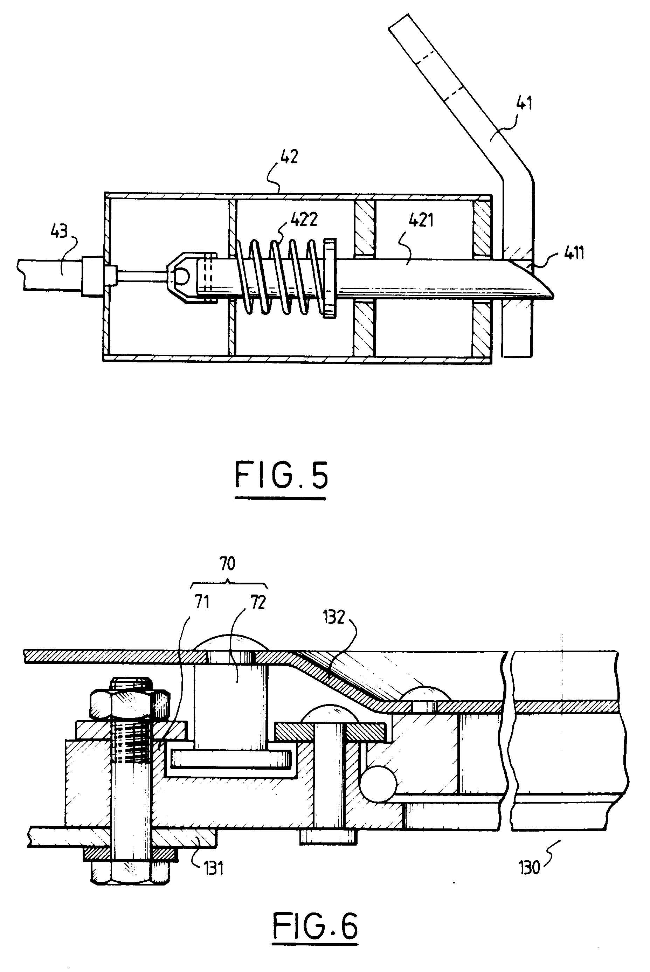

Le mécanisme de reprise d'effort 70 est disposé entre, d'une part, par exemple l'armature 12 du coussin 11 d'assise 10 ou l'élément mobile 132 et, d'autre part, par exemple le sol ou plancher ou le soubassement 14 par exemple la coulisse 1411 ou l'élément semi-fixe 131. Comme on le voit en particulier en examinant la Figure 6, ce mécanisme de reprise d'effort 70 comprend un organe femelle 71 telle que par exemple une fente à lèvres en forme de T inversé, relié directement ou indirectement au sol ou plancher, et un organe mâle 72 par exemple en forme de pion à tête, relié directement ou indirectement à l'armature 12 et apte à s'engager dans l'organe femelle pour ne pas pouvoir s'en séparer lorsque l'occupant du siège transmet à ce dernier des contraintes importantes résultant d'efforts exercés sur la sangle de la ceinture de sécurité à la suite d'un choc ou d'un heurt violent.

La sécurité 80 par exemple un détecteur de position associé à un commutateur, est disposée de manière à interdire la mise en marche du moteur si les moyens de verrouillage 40 ne sont pas convenablement condamnés pour à la fois immobiliser le coussin 11 d'assise 10 dans sa position normale et maintenir la ceinture de sécurité dans sa position active. Un détecteur de position permet de savoir si le pêne 421 est totalement et correctement enclenché dans la gâche 411.

Les constituants d'un siège perfectionné selon l'invention sont fabriqués dans des matériaux métalliques et/ou synthétiques convenablement choisis et façonnés selon des techniques traditionnelles puis, réunis, assemblés et montés comme cela apparaît clairement sur les figures du dessin.

On décrira maintenant le fonctionnement d'un siège perfectionné selon l'invention.

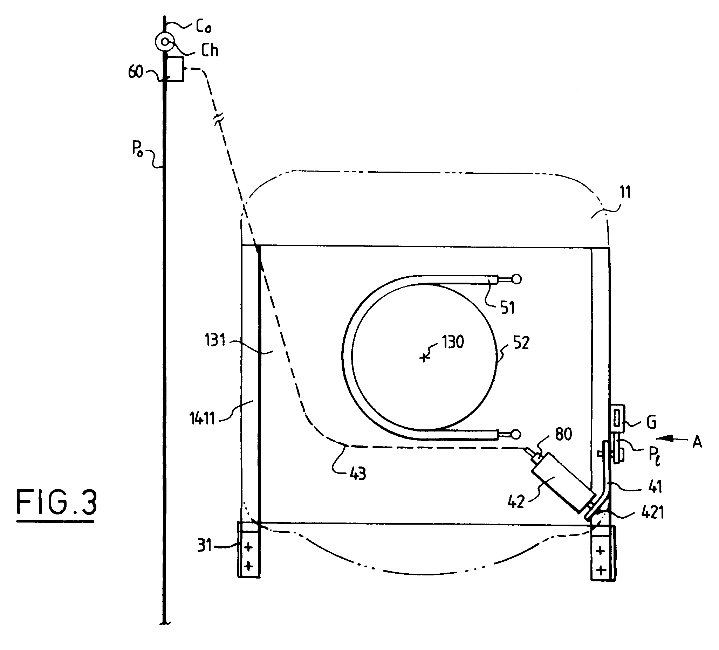

On suppose qu'un siège selon l'invention se trouve initialement dans la situation où il est illustré sur la Figure 1 et les Figures 2 et 3 où il occupe sa position normale.

On observera que la commande relie le pêne des moyens de verrouillage à la portière au voisinage de sa charnière inférieure.

Dans le cas où la ceinture de sécurité n'est pas du type dit "passif", elle comprend une boucle avec un pêne relié à la sangle de la ceinture entre ses brins thoracique et abdominal et une gâche reliée par son pédoncule au support d'ancrage des moyens de verrouillage, relié à l'armature d'assise.

L'occupant encore assis sur son siège et souhaitant sortir du véhicule, déboucle sa ceinture et ouvre la portière. L'ouverture de la portière fait reculer le pêne et provoque la décondamnation des moyens de verrouillage. Le coussin d'assise est alors libre en rotation et peut pivoter selon l'axe 130 pour quitter sa position normale et se mettre en position tournée face à la baie de portière par simple torsion du corps de l'occupant. L'occupant peut alors s'extraire facilement du véhicule.

Le dispositif de rappel maintient le coussin d'assise en position tournée d'accès contre la butée correspondante non illustrée. Lorsqu'un utilisateur veut prendre place sur le siège, il lui suffit d'ouvrir la portière correspondante puisqu'il trouve le coussin d'assise en position tournée d'accès prêt à le recevoir. Une fois assis, l'occupant d'une torsion du corps fait tourner le coussin d'assise jusqu'à ce qu'il prenne sa position normale route, après avoir amorcé la fermeture de la portière, position route où le coussin d'assise est automatiquement immobilisé par la condamnation des moyens de verrouillage. L'occupant peut alors se munir habituellement de sa ceinture de sécurité qu'il boucle en engageant son pêne dans sa gâche reliée par son pédoncule au support d'ancrage des moyens de verrouillage solidaires de l'armature d'assise reliée par exemple à la coulisse de la glissière. On voit donc que le point d'ancrage de la sangle de la ceinture qui est placé sur l'armature du coussin d'assise suit le réglage de la position longitudinale en translation du siège et donc procure une position optimale à la sangle de la ceinture quelle que soit la taille du conducteur.

Le siège perfectionné selon l'invention convient bien à la situation où il est équipé d'une ceinture de sécurité du type dit "passif". Un exemple de ceinture de sécurité du type dit "passif" est par exemple décrit dans le document FR-A-2 585 307 auquel on pourra utilement se reporter. Dans un tel cas, il suffit que le point d'ancrage associé à l'armature du coussin d'assise soit d'un type où la "boucle" est telle que son pêne demeure par exemple en permanence verrouillé dans la gâche reliée par le pédoncule au support d'ancrage des moyens de verrouillage. Ce point d'ancrage placé sur l'armature ou relié directement ou indirectement à elle retient donc en permanence la sangle. Dans un tel cas, il suffit que les deux autres points d'ancrage distincts et distants situés du côté opposé du siège pour délimiter respectivement le brin abdominal et le brin thoracique de la sangle de la ceinture soient amarrés non plus fixes sur deux zones d'une partie correspondante de la coque ou structure mais ancrés ou montés mobiles respectivement en deux zones disctintes et distantes d'une partie correspondante de préférence par exemple d'une portière à proximité du bord à l'opposé de ce qui articule la portière sur la coque ou structure; tout ceci est particulièrement bien illustré sur la Figure 1 bien que sous forme très schématique.

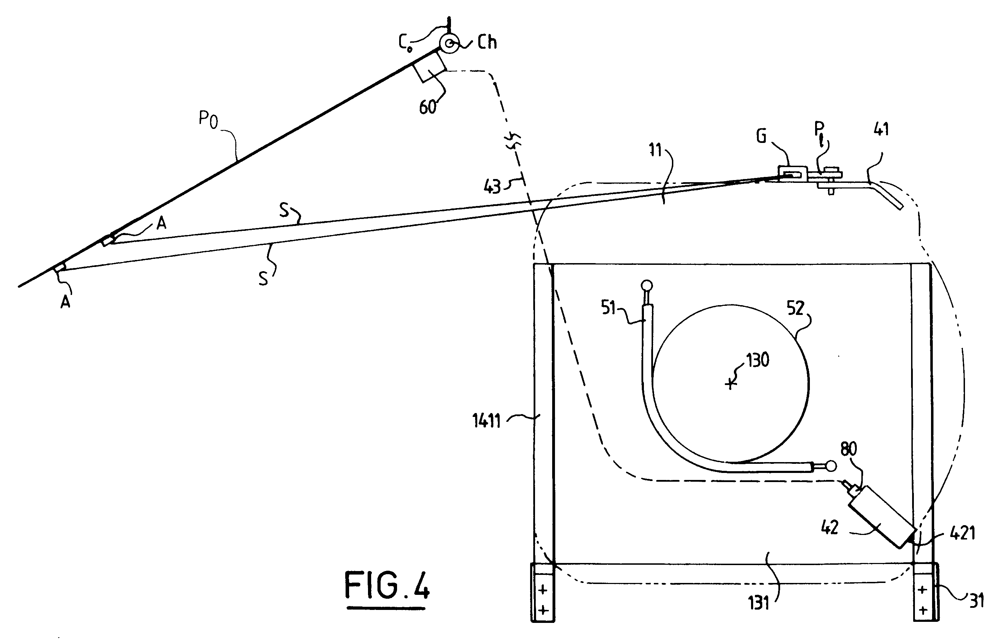

Comme on le saisit en particulier en examinant la Figure 4, lorsque la portière est ouverte et que le coussin de l'assise a pivoté et occupe sa position tournée d'accès, le point d'ancrage associé à l'armature du coussin se trouve dirigé vers l'avant et les brins thoracique et abdominal de la sangle reliés à la portière par leurs points d'ancrage particuliers sont entraînés dans le même sens à l'écart du dossier du siège : on peut donc prendre place aisément sur le siège et s'y asseoir. Une fois assis, l'occupant fait tourner le coussin de l'assise pour lui faire prendre sa position normale et lorsqu'il referme la portière les points d'ancrage amarrés sur celle-ci replacent les brins abdominal et thoracique de la sangle de la ceinture dans la position illustrée sur la Figure 1 où la ceinture de sécurité occupe sa position active où elle est à-même de retenir un occupant sur son siège. On comprend donc que le siège perfectionné selon l'invention provoque la mise en place ou le retrait automatique de la ceinture de sécurité avec un confort et une sécurité maximum.

Dans ce qui précède, on a supposé que le dispositif de rappel était monostable et ne faisait tourner le coussin d'assise automatiquement que pour le replacer dans sa position normale. On peut aussi utiliser un dispositif de rappel bistable avec franchissement d'un point d'équilibre de manière que le coussin d'assise prenne automatiquement soit sa position normale soit sa position tournée. De la sorte, après s'être levé du siège et avoir quitté le véhicule, il suffit de faire tourner par exemple manuellement le coussin d'assise dans le sens approprié en direction de sa position route où il sera reverrouillé automatiquement après franchissement du point d'équilibre. Inversement, après ouverture de la portière, on peut agir par exemple manuellement sur le coussin d'assise pour le faire passer maintenant de sa position normale à sa position tournée.

Dans ce qui précède, on a décrit un siège perfectionné à fonctionnement manuel. Il est clair que l'on peut rendre ce fonctionnement encore plus agréable en l'équipant d'un asservissement de tout type classique courant convenablement adapté, par exemple électrique, pneumatique, hydraulique, etc. De la sorte, dès le déverrouillage d'une portière et/ou son ouverture, le coussin d'assise pivote automatiquement pour prendre sa position tournée s'il ne l'occupait pas précédemment, en entraînant avec lui le point d'ancrage de la ceinture de sécurité qui lui est associé. Après s'être assis sur le siège, l'amorce de la fermeture de la portière déclenche alors le retour automatique du coussin d'assise en position normale ou route, et sa condamnation dans cette position après fermeture complète de la portière qui assure la mise en place automatique de la ceinture de sécurité comme indiqué précédemment.

Comme on a pu l'observer, pour le cas où il est utilisé avec une ceinture de sécurité de type dit "passif", le siège perfectionné selon l'invention a été décrit à propos d'un véhicule équipé d'une portière articulée sur des charnières à axes approximativement verticaux. Il est clair que le siège selon l'invention convient aussi aux cas des portières dites coulissantes qui se déplacent vers l'avant pour s'ouvrir ou au cas de celles du type dit "élytre" qui pivotent vers l'avant dans un plan approximativement vertical, pour s'ouvrir.

Ce qui précède met bien en lumière les particularités de l'invention, l'intérêt qu'elle offre et les avantages qu'elle apporte.

## Revendications

1. Siège pour véhicule, du type destiné à être utilisé avec une ceinture de sécurité apte à prendre une position active où elle est à même de retenir un occupant sur son siège à l'aide d'une sangle (S), et du type comprenant une assise (10) avec un coussin (11) porté par une armature (12) montée sur un soubassement (14), et un dossier (20) avec un coussin (21) porté par une armature (22), l'armature (12) d'assise portant des moyens (G) formant point d'ancrage (A) pour le maintien de la sangle (S) de la ceinture, l'assise (10) étant montée rotative sur le soubassement (14), l'armature (12) du coussin (11) d'assise (10) étant montée sur le soubassement (14) par l'entremise d'un plateau tournant (13) de manière que le coussin (11) d'assise (10) puisse tourner selon un axe (130) entre une position normale et une position tournée d'accès, le siège comprenant de plus des moyens de verrouillage (40) pour immobiliser le coussin (11) d'assise (10) dans sa position normale et pour maintenir la ceinture de sécurité dans sa position active, caractérisé en ce que l'assise (10) est montée rotative sur le soubassement (14) indépendamment du dossier (20) et en ce que lesdits moyens de verrouillage (40) comprennent un support d'ancrage (41) solidaire en rotation de l'armature (12) d'assise portant, d'une part, des moyens (G) formant point d'ancrage (A), et d'autre part, des premiers moyens (411) libérables d'accrochage de ce support (41) au soubassement (14) coopérant avec des seconds moyens d'accrochage (421) complémentaires reliés à ce soubassement.

2. Siège selon la revendication 1, caractérisé en ce qu'il comprend un mécanisme de reprise d'effort (70) intercalé entre, d'une part, l'armature (12) du coussin (11) d'assise voire un élément mobile (132) du plateau tournant (13) et, d'autre part, le soubassement (14) voire le sol sur lequel repose le siège.

3. Siège selon l'une quelconque des revendications 1 et 2, caractérisé en ce que les moyens de verrouillage (40) sont condamnés pour immobiliser automatiquement le coussin (11) d'assise (10) dans sa position normale et maintenir automatiquement la ceinture de sécurité dans sa position active lorsque le coussin (11) d'assise (10) prend sa position normale.

4. Siège selon la revendication 3, caractérisé en ce que les moyens de verrouillage (40) sont décondamnés manuellement pour libérer le coussin (11) d'assise (10) et pour libérer la ceinture de sécurité de sa position active.

5. Siège selon la revendication 3, caractérisé en ce que les moyens de verrouillage (40) sont décondamnés automatiquement pour libérer le coussin (11) d'assise (10) de sa position normale et pour libérer la ceinture de sécurité de sa position active.

6. Siège selon l'une quelconque des revendications 1 à 5, caractérisé en ce que les moyens formant point d'ancrage (A) comprennent une gâche (G) d'une boucle de la ceinture.

7. Siège selon l'une quelconque des revendications 1 à 6, caractérisé en ce que les premiers moyens d'accrochage comprennent une ouverture formant gâche (411) ménagée dans le support d'ancrage (41), et en ce que les seconds moyens d'accrochage comprennent un pêne (421) sollicité élastiquement en position verrouillée dans la gâche (411) du support (41).

8. Siège selon l'une quelconque des revendications 1 à 7, caractérisé en ce qu'il comprend un dispositif de rappel (50) tendant à placer le coussin (11) d'assise (10) dans l'une au moins de ses deux positions normale et tournée d'accès.

9. Siège selon l'une quelconque des revendications 1 à 8, caractérisé en ce qu'il comprend un asservissement (60) associé aux moyens de verrouillage (40) pour en assurer le fonctionnement notamment la décondamnation lors de la manoeuvre d'une partie de préférence correspondant au siège.

10. Siège selon l'une quelconque des revendications 1 à 9 destiné à être équipé d'une ceinture de sécurité à trois points d'ancrage (A), caractérisé en ce que le point d'ancrage (A) de la sangle (S) placé sur l'armature (12) du coussin (11) d'assise (10) retient en permanence la sangle (S), et en ce que les deux autres points d'ancrage (A) qui lui sont opposés relativement au siège pour délimiter respectivement le brin abdominal et le brin thoracique de la sangle de la ceinture sont montés mobiles en deux zones distinctes et distantes d'une partie correspondante de manière à former une ceinture de type dit "passif".

11. Siège selon la revendication 10, caractérisé en ce que cette partie correspondante est une portière (Pₒ).

12. Application d'un siège selon l'une quelconque des revendications 1 à 11 à un véhicule automobile terrestre à moteur.

13. Application selon la revendication 12, caractérisée en ce que le siège comprend une sécurité (80) interdisant la mise en marche du moteur si les moyens de verrouillage (40) ne sont pas convenablement condamnés.

## Claims

1. Seat for a vehicle, of the type intended to be used with a safety belt able to assume an active position in which it is capable of retaining an occupant on his seat by means of a strap (S), and of the type comprising a squab (10) with a cushion (11) supported by a frame (12) mounted on a base (14) and a back (20) with a cushion (21) supported by a frame (22), the squab frame (12) supporting means (G) forming an anchoring point (A) for retaining the strap (S) of the belt, the squab (10) being mounted to rotate on the base (14), the frame (12) of the cushion (11) of the squab (10) being mounted on the base (14) by the interposition of a turntable (13) in order that the cushion (11) of the squab (10) is able to rotate about an axis (130) between a normal position and a turned position for access, in addition the seat comprising locking means (40) for immobilising the cushion (11) of the squab (10) in its normal position and for retaining the safety belt in its active position, characterised in that the squab (10) is mounted to rotate on the base (14) independently of the back (20) and in that said locking means (40) comprise an anchoring support (41) integral in rotation with the frame (12) of the squab supporting, on the one hand, means (G) forming an anchoring point (A), and on the other hand, first releasable means (411) for attaching this support (41) to the base (14) cooperating with second complementary attachment means (421) connected to this base.

2. Seat according to Claim 1, characterised in that it comprises a force-absorbing mechanism (70) interposed between, on the one hand, the frame (12) of the squab cushion (11) namely a movable member (132) of the turntable (13) and, on the other hand, the base (14) namely the floor on which the seat rests.

3. Seat according to one of Claims 1 and 2, characterised in that the locking means (40) are put into operation to automatically immobilise the cushion (11) of the squab (10) in its normal position and automatically retain the safety belt in its active position when the cushion (11) of the squab (10) adopts its normal position.

4. Seat according to Claim 3, characterised in that the locking means (40) are put out of operation manually in order to release the cushion (11) of the squab (10) and in order to release the safety belt from its active position.

5. Seat according to Claim 3, characterised in that the locking means (40) are put out of operation automatically in order to release the cushion (11) of the squab (10) from its normal position and in order to release the safety belt from its active position.

6. Seat according to one of Claims 1 to 5, characterised in that the means forming the anchoring point (A) comprise a keeper (G) for a belt buckle.

7. Seat according to one of Claims 1 to 6, characterised in that the first attachment means comprise an opening forming a keeper (411) provided in the anchoring support (41) and in that the second attachment means comprise a latch (421) biased elastically into the locked position in the keeper (411) of the support (41).

8. Seat according to one of Claims 1 to 7, characterised in that it comprises a return device (50) tending to place the cushion (11) of the squab (10) in at least one of its two positions, namely normal position and turned position for access.

9. Seat according to one of Claims 1 to 8, characterised in that it comprises a servo control (60) associated with the locking means (40) for ensuring the operation thereof in particular the deactivation thereof at the time of the operation of a preferred part corresponding to the seat.

10. Seat according to one of Claims 1 to 9 intended to be equipped with a safety belt having three anchorage points (A), characterised in that the anchorage point (A) of the strap (S) placed on the frame (12) of the cushion (11) of the squab (10) permanently retains the strap (S), and in that the two other anchorage points (A) which are opposed thereto relative to the seat, for respectively defining the abdominal band and the thoracic band of the strap of the belt are mounted to move in two areas which are separate and remote from a corresponding part in order to form a belt of the so-called "passive" type.

11. Seat according to Claim 10, characterised in that this corresponding part is a door (Pₒ).

12. Application of a seat according to one of Claims 1 to 11 to an engine-driven land motor vehicle.

13. Application according to Claim 12, characterised in that the seat comprises a safety mechanism (80) preventing the starting of the engine if the locking means (40) are not appropriately activated.

## Patentansprüche

1. Kraftfahrzeugsitz des Typs zur Benutzung mit einer Sicherheitsgurteinrichtung, die eine aktive Position einnehmen kann, in der sie einen Benutzer auf seinem Sitz mit Hilfe eines Gurtes (S) festhalten kann, des Typs, der eine Sitzfläche (10) mit einem durch eine auf einem Unterbau (14) angebrachte Armierung (12) getragenen Polster (11) und eine Sitzlehne (20) mit einem durch eine Armierung (22) getragenen Polster (21) aufweist, wobei die Armierung (12) der Sitzfläche eine Einrichtung (G) trägt, welche einen Verankerungspunkt (A) zum Befestigen des Gurtes (S) der Sicherheitsgurteinrichtung bildet, wobei die Sitzfläche (10) drehbar auf dem Unterbau (14) angebracht ist, wobei die Armierung (12) des Polsters (11) der Sitzfläche (10) auf dem Unterbau (14) unter Zwischensetzen einer Drehplatte (13) derart angebracht ist, daß sich das Polster (11) der Sitzfläche (10) um eine Achse (130) zwischen einer Normalposition und einer gedrehten Zugangsposition drehen kann, wobei der Sitz außerdem eine Arretierungseinrichtung (40) zum Arretieren des Polsters (11) der Sitzfläche (10) in seiner normalen Position und zum Befestigen der Sicherheitsgurteinrichtung in ihrer aktiven Position aufweist, dadurch gekennzeichnet, daß die Sitzfläche (10) auf dem Unterbau (14) unabhängig von der Sitzlehne (20) drehbar angebracht ist, und daß die Arretierungseinrichtung (40) eine Verankerungshalterung (41) aufweist, welche sich zusammen mit der Armierung (12) der Sitzfläche dreht und einerseits die Einrichtung (G) aufweist, welche den Verankerungspunkt (A) bildet, und andererseits eine erste lösbare Eingriffseinrichtung (411) dieser Halterung (41) am Unterbau (14) zusammenwirkend mit einer zweiten komplementären Eingriffseinrichtung (421), welche an diesem Unterbau angebracht ist, aufweist.

2. Kraftfahrzeugsitz nach Anspruch 1, dadurch gekennzeichnet, daß er einen Mechanismus (70) zum Aufnehmen einer Belastung eingesetzt zwischen einerseits die Armierung (12) des Polsters (11) der Sitzfläche mit einem beweglichen Element (132) dar Drehplatte (13) und andererseits den Unterbau (14) am Boden, auf dem der Sitz ruht, aufweist.

3. Kraftfahrzeugzitz nach einem der Ansprüche 1 und 2, dadurch gekennzeichnet, daß die Arretierungseinrichtung (40) zum automatischen Blockieren des Polsters (11) der Sitzfläche (10) in seiner normalen Position und zum automatischen Befestigen der Sicherheitsgurteinrichtung in ihrer aktiven Position, wenn das Polster (11) der Sitzfläche (10) seine normale Position einnimmt, betätigbar ist.

4. Kraftfahrzeugsitz nach Anspruch 3, dadurch gekennzeichnet, daß die Arretierungseinrichtung (40) manuell betätigbar sind, um das Polster (11) der Sitzfläche (10) zu lösen und um die Sicherheitsgurteinrichtung aus ihrer aktiven Position zu lösen.

5. Kraftfahrzeugsitz nach Anspruch 3, dadurch gekennzeichnet, daß die Arretierungseinrichtung (40) automatisch betätigbar ist, um das Polster (11) der Sitzflache (10) aus seiner normalen Position zu lösen und die Sicherheitsgurteinrichtung aus ihrer aktiven Position zu lösen.

6. Kraftfahrzeugsitz nach einem der Ansprüche 1 bis 5, dadurch gekennzeichnet, daß die Einrichtung zum Bilden des Verankerungspunktes (A) eine Rasteinrichtung (G) für eine Schnalle des Gurtes aufweist.

7. Kraftfahrzeugsitz nach einem der Ansprüche 1 bis 6, dadurch gekennzeichnet, daß die erste Eingriffseinrichtung eine Öffnung aufweist, die eine in der Verankerungshalterung (41) ausgesparte Rasteinrichtung (411) bildet, und daß die zweite Eingriffseinrichtung einen Riegel (421) aufweist, der elastisch in eine Verriegelungsposition in der Rasteinrichtung (411) der Halterung (41) führbar ist.

8. Kraftfahrzeugsitz nach einem der Ansprüche 1 bis 7, dadurch gekennzeichnet, daß er eine Rückstelleinrichtung (50) aufweist, die das Polster (11) der Sitzfläche (10) in Wenigstens eine ihrer zwei Positionen, Normalposition und gedrehte Zugangsposition, zu stellen sucht.

9. Kraftfahrzeugsitz nach einem der Ansprüche 1 bis 8, dadurch gekennzeichnet, daß er eine der Arretierungseinrichtung zugeordnete Steuereinrichtung (60) zum Gewährleisten der Funktion, insbesondere der Betätigung beim Manövrieren eines bevorzugten dem Sitz entsprechenden Teils, aufweist.

10. Kraftfahrzeugsitz nach einem der Ansprüche 1 bis 9, der mit einem Dreipunktverankerungs-Sicherheitsgurt (A) ausrüstbar ist, dadurch gekennzeichnet, daß der Verankerungspunkt (A) des Gurtes (S), der unter der Armierung (12) des Polsters (11) der Sitzfläche (10) gelegen ist, permanent den Gurt (S) festhält, und daß die zwei anderen Verankerungspunkte (A), die ihm relativ zum Sitz gegenüberliegen, um jeweils den abdominalen Teil und den thoraxialen Teil des Gurtes der Sicherheitsgurteinrichtung abzugrenzen, beweglich in zwei verschiedenen Zonen und im Abstand zu einem entsprechenden Teil, um eine "passive" Sicherheitsgurteinrichtung zu bilden, angebracht sind.

11. Kraftfahrzeugsitz nach Anspruch 10, dadurch gekennzeichnet, daß dieser entsprechende Teil eine Toröffnung (Pₒ) ist.

12. Kraftfahrzeugsitz nach einem der Ansprüche 1 bis 11, dadurch gekennzeichnet, daß das Kraftfahrzeug ein motorisiertes Landfahrzeug ist.

13. Kraftfahrzeugsitz nach Anspruch 12, dadurch gekennzeichnet, daß der Sitz eine Sicherungseinrichtung (80) aufweist, welche das Einschalten des Motors verhindert, wenn Arretierungseinrichtung (40) nicht richtig betätigt ist.
